# EUROPEAN PATENT APPLICATION

(11) **EP 4 632 618 A1**
(43) Date of publication of application: **15.10.2025**
(21) Application number: 23931770.4
(22) Date of filing: 03.11.2023
(51) Int. Cl.: G06F 30/27, H04B 7/06

(54) **DATA SET SENDING METHOD AND RECEIVING METHOD, AND COMMUNICATION DEVICE AND STORAGE MEDIUM**

(30) Priority: 07.04.2023 CN 202310401595
(71) Applicant: ZTE Corporation, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); LIU, Wenfeng, Shenzhen, Guangdong 518057 (CN); ZHENG, Guozeng, Shenzhen, Guangdong 518057 (CN)
(74) Representative: Carangelo, Pierluigi
(86) International application number: PCT/CN2023/129650
(87) International publication number: WO 2024/207723

(57) **Abstract**

Provided in the embodiments of the present disclosure are a data set sending method and receiving method, and a communication device and a storage medium. The data set sending method, which is applied to a first communication device, comprises: acquiring a first data set, which comprises L0 samples; acquiring a second data set from the first data set according to a first sample parameter and/or second sample parameter corresponding to at least one sample, wherein the second data set comprises L1 samples; and sending the second data set, wherein L0 and L1 are positive integers, and L1 is not greater than L0.

## Description

### CROSS-REFERENCE TO RELATED APPLICATION

The present disclosure is filed on the basis of Chinese patent application No. 202310401595.0 filed April 7, 2023, and claims priority of the Chinese patent application, the entire contents of which are incorporated herein by reference.

### TECHNICAL FIELD

The present disclosure relates to communication technologies, and in particular, to a data set sending method and receiving method, a communication device, and a storage medium.

### BACKGROUND

Wireless communication systems are widely used in people's daily life and production. For example, wireless communication systems are used in video transmission, voice call, wireless positioning, device-to-device communication in factories, and communication between vehicles and other devices in the Internet of Vehicles. With the development of technology and increasing demands for life and production, higher requirements are placed on the transmission reliability, capacity, transmission rate, etc. of wireless communication technology, which also promotes the rapid development of the wireless communication. At present, various advanced technologies such as multi-antenna technology, artificial intelligence technology, and intelligent metasurface technology may or will be applied to wireless communication systems.

Artificial Intelligence (AI) technology is a branch of computer science, which refers to devices, components, functional modules, etc. with self-learning capabilities. At present, AI technology may be widely applied to wireless communication systems, for example, AI-based channel estimation, AI-based channel state information feedback, AI-based positioning, AI-based spatial domain and/or frequency domain beam prediction, AI-based channel information prediction, AI-based channel coding, etc. In various advanced technologies that are data-driven or data-plus-model-driven, including artificial intelligence, the acquisition and transmission of high-quality or qualified data sets are of great significance and directly determine the application effect of the technology. Therefore, how to acquire and transmit a data set including a plurality of high-quality samples is an urgent problem to be addressed.

### SUMMARY

The present disclosure provides a data set sending method and receiving method, a communication device, and a storage medium, by which a high-quality or qualified data set can be acquired.

In a first aspect, an embodiment of the present disclosure provides a data set sending method, which is applied to a first communication device, the method includes:
acquiring a first data set, the first data set including L0 samples; acquiring a second data set from the first data set according to first sample parameters and/or second sample parameters, the second data set including L1 samples; and sending the second data set, where L0 and L1 are positive integers, and L1 is not greater than L0.

In a second aspect, an embodiment of the present disclosure provides a data set receiving method, which is applied to a second communication device, the method including:
receiving a second data set, where the second data set includes L1 samples; the second data set is acquired by a first communication device from a first data set according to first sample parameters and/or second sample parameters, and the first data set includes L0 samples, where L0 and L 1 are positive integers, and L1 is not greater than L0.

In a third aspect, an embodiment of the present disclosure provides a communication device, including:
at least one processor; and
at least one memory configured to store at least one program;
when the at least one program is executed by the at least one processor, the data set sending method in the first aspect or the data set receiving method in the second aspect is implemented.

In a fourth aspect, an embodiment of the present disclosure provides a computer-readable storage medium storing a processor-executable program, where the processor-executable program is configured to implement the data set sending method in the first aspect or the data set receiving method in the second aspect when executed by a processor.

In a fifth aspect, an embodiment of the present disclosure provides a computer program product storing a program instruction which, when executed by a computer, causes the computer to implement the data set sending method in the first aspect or the data set receiving method in the second aspect.

In an embodiment of the present disclosure, a first data set is acquired, the first data set including L0 samples; a second data set is acquired from the first data set according to first sample parameters and/or second sample parameters, the second data set including L1 samples; and the second data set is sent, where L0 and L1 are positive integers, and L1 is not greater than L0, that is to say, a high-quality or qualified second data set can be screened out from the first data set through the first sample parameters and/or the second sample parameters, thereby improving the training effect of a model and then improving the performance of the model.

### BRIEF DESCRIPTION OF DRAWINGS

Fig. 1 is an architectural schematic diagram of a communication system provided by an embodiment of the present disclosure;
Fig. 2 is a flowchart of a data set sending method provided by an embodiment of the present disclosure;
Fig. 3 is a schematic diagram showing acquiring a second data set from a first data set provided by an embodiment of the present disclosure;
Fig. 4 is a schematic diagram showing that all samples within a measurement window are not reported provided by an embodiment of the present disclosure;
Fig. 5 is a schematic diagram showing determining whether samples are reported or discarded according to a frequency domain constraint relationship provided by an embodiment of the present disclosure;
Fig. 6 is a schematic diagram showing feeding back samples being discarded or reported through a bitmap provided by an embodiment of the present disclosure;
Fig. 7 is a flowchart of a data set receiving method provided by an embodiment of the present disclosure; and
Fig. 8 is a structural schematic diagram of a communication device provided by an embodiment of the present disclosure.

### DETAILED DESCRIPTION

In order to make the objectives, technical solutions and advantages of the present disclosure clear, the present disclosure will be further described in detail below in conjunction with the accompanying drawings and embodiments. It should be understood that the specific embodiments described herein are only used to explain the present disclosure and are not used to limit the present disclosure.

It should be understood that in the description of the embodiments of the present disclosure, the terms "first", "second", etc. are used only for the purpose of distinguishing technical features, and should not be understood as indicating or implying relative importance or implicitly indicating the number of indicated technical features or implicitly indicating the order of the indicated technical features. "At least one" refers to one or more, and "plurality" refers to two or more. "And/or" describes the association relationship between associated objects, indicating that three relationships can exist. For example, A and/or B can mean that A exists alone, A and B exist at the same time, or B exists alone. A and B may be singular or plural. The character "/" generally indicates that the previous and next associated objects are in an "or" relationship. "At least one of the following" and similar expressions refer to any group of these items, including any group of single or plural items. For example, at least one of a, b, or c may be expressed as: a, b, c, a and b, a and c, b and c, or a, b and c, where a, b, c may be single or plural.

In addition, the technical features involved in the various embodiments of the present disclosure described below can be combined with each other as long as they do not conflict with each other.

In an embodiment, artificial intelligence (AI) includes devices, components, software, modules, models, functional modules, functional functions, etc. with self-learning capabilities, such as machine learning (ML), deep learning, reinforcement learning, transfer learning, deep reinforcement learning, and meta-learning.

In an embodiment, artificial intelligence can be implemented through an artificial intelligence network (or called a neural network). The neural network includes a plurality of layers, and each layer includes at least one node. For example, the neural network includes an input layer, an output layer and at least one hidden layer, where each layer of neural network includes but is not limited to at least one of a fully connected layer, a dense layer, a convolutional layer, a transposed convolutional layer, a direct connection layer, an activation function, a normalization layer, or a pooling layer, etc.

In an embodiment, each layer of the neural network may include a neural sub-network, such as a residual network block (or Resnet block), a dense network, a Recurrent Neural Network (RNN), etc. The artificial intelligence network can be implemented through a model, where the model refers to the data flow between the original input of the sample to the output target, passing through a plurality of linear or nonlinear components, where the model includes a neural network model, a non-artificial intelligence module for processing information or its corresponding model, and a functional component or function that maps input information to output information (the mapping here includes linear mapping and nonlinear mapping). In addition, the model includes a model structure and model parameters. For example, when the model is a neural network model, the neural network model includes a neural network model structure and/or neural network model parameters, where the neural network model structure is configured to describe a structure of a neural network, and the neural network model parameters are configured to describe parameter values of the neural network. A neural network model structure may correspond to a plurality of neural network model parameters, that is, the neural network model structure may be the same, but the corresponding neural network model parameter values may be different.

In addition, the neural network model structure may be referred to as model structure for short, and the neural network model parameters may be referred to as network parameters or model parameters for short. A model structure defines the number of layers, size of each layer, activation function, connection status, convolution kernel and size, convolution stride, convolution type (such as 1D convolution, 2D convolution, 3D convolution, hollow convolution, transposed convolution, separable convolution, grouped convolution and dilated convolution, etc.) and other network architectures of the neural network, while the network parameters are the weights and/or biases of each layer of network in the neural network model and their values. A model structure may correspond to a plurality of sets of different neural network model parameter values to adapt to different scenarios. The neural network model parameters can be obtained through online training or offline training. For example, the neural network model parameters can be obtained by inputting at least one sample and label, and training the neural network model.

However, with the continuous development and advancement of artificial intelligence technology, the application of the artificial intelligence technology in wireless communication systems has become one of the current research hot topics, where artificial intelligence usually uses a model to perform prediction tasks. By inputting data features into the model and processing the data features by a plurality of linear or nonlinear components, the data features can be mapped to the output target. The quality of the model is directly related to the performance of artificial intelligence. In order to obtain a qualified model, a large number of samples are needed for training. A sample usually consists of N features and M labels, where N is a positive integer and M is an integer greater than or equal to 0, and a plurality of samples constitute a data set. In order to realize the value of artificial intelligence in wireless communication systems, it is crucial to acquire high-quality or qualified data sets. Therefore, how to obtain a high-quality or qualified data set is a technical problem that needs to be studied and solved.

It could be understood that each model corresponds to a Model Indicator (Model ID) or a Model Identity (Model ID), where the model identity may also be called a model index, a first identity, a function identity, a model indicator, or the like.

Based on this, the embodiments of the present disclosure provide a data set sending method and receiving method, a communication device and a storage medium, which can obtain a high-quality or qualified data set.

The data set sending method and the data set receiving method provided by the embodiments of the present disclosure can be used in various communication systems of communication networks such as 2G (2nd Generation, second generation mobile communication technology) network, 3G (3rd Generation, third generation mobile communication technology) network, 4G (4th Generation, fourth generation mobile communication technology) network, 5G (5th Generation, fifth generation mobile communication technology) network or future mobile communication network, such as in at least one of the following systems: a Global System for Mobile Communications (GSM) or any other 2G cellular communication system, or a basic Wideband Code Division Multiple Access (WCDMA)-based Universal Mobile Telecommunications System (UMTS), a High-Speed Packet Access (HSPA) system, a Long Term Evolution (LTE) system, an advanced LTE system, an IEEE 802.11 specification-based system, an IEEE 802.15 specification-based system and/or a 5G mobile or cellular communication system, or a future mobile communication system. However, the embodiments are not limited to the systems given by the above examples, but other communication systems with necessary attributes to which those having ordinary skill in the art can apply the solutions.

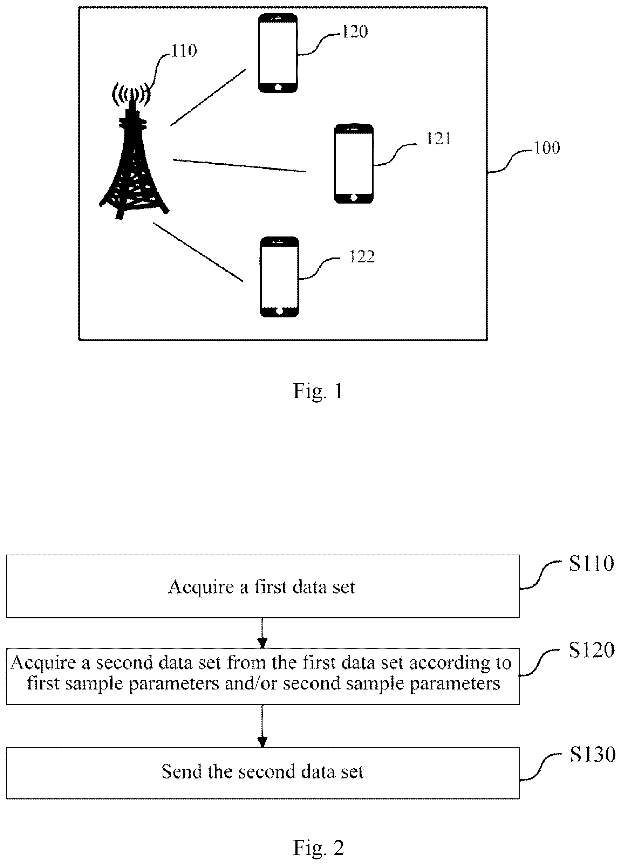

Referring to Fig. 1, which is an architectural schematic diagram of a communication system provided by an embodiment of the present disclosure. The communication system 100 includes a plurality of communication devices, where wireless communication can be performed among different communication devices by means of air interface resources. The communication system 100 includes at least one network side device and at least one receiving side device. The at least one network side device and/or the at least one receiving side device can be connected to a third-party device, for example, through wireless signals or other means, and can communicate a data set and/or a model to/from the third-party device, where the model can be disposed in a base station and/or a terminal.

As shown in Fig. 1, it is assumed that the communication system 100 includes a network side device 110, a first receiving side device 120, a second receiving side device 121 and a third receiving side device 122, where the network side device 110, the first receiving side device 120, the second receiving side device 121 and the third receiving side device 122 are communicatively connected.

The wireless communication between the communication devices includes reference signal transmission or data transmission between the communication devices, where the transmission includes sending or receiving. When a reference signal is transmitted between the communication devices, the receiving side device (i.e., a first communication device) is a device that receives the reference signal, and the network side device (i.e., a second communication device) is a device that sends the reference signal.

It could be understood that, in a downlink, the first communication device may be a network side device, and the second communication device may be a receiving side device. In an uplink, the first communication device may be a receiving side device, and the second communication device may be a network side device. When the communication between the two communication devices is device-to-device communication, each of the first communication device and the second communication device may be a network side device or may be a receiving side device.

In addition, the first communication device may also be referred to as a first communication node or a first node, and the second communication device may also be referred to as a second communication node or a second node, which will not be limited here.

The above-mentioned network side device includes but is not limited to a base station, where the base station may be a base station in Long Term Evolution (LTE), an Evolved Node B (Evolutional Node B, eNB or eNodeB) in Long Term Evolution advanced (LTEA), a base station in a 5G network, a base stations in a future communication system, or the like. The base station may include various macro base stations, micro base stations, home base stations, radio remote units, routers, reconfigurable intelligent surfaces (RIS), wireless fidelity (WIFI) devices, primary cells and secondary cells, and other various network side devices, and may also be a location management function (LMF) device, which will not be limited in the embodiment of the present disclosure.

The above-mentioned receiving side device includes but is not limited to a terminal, where the terminal, as a device with a wireless receiving and sending function, can be deployed on land, including indoors or outdoors, and can be handheld, worn or mounted in a vehicle; or can be deployed on the water (such as a ship, etc.); or can be deployed in the air (such as on an aircraft, a balloon, or a satellite). The terminal may be a mobile phone, a tablet personal computer (Pad), a computer with a wireless receiving and sending function, a Virtual Reality (VR) terminal, an Augmented Reality (AR) terminal, a wireless terminal in industrial control, a wireless terminal in self driving, a wireless terminal in remote medical, a wireless terminal in smart grid, a wireless terminal in transportation safety, a wireless terminal in a smart city, a wireless terminal in a smart home, or the like. In the embodiment of the present disclosure, application scenarios are not limited. In addition, the terminal may sometimes also be referred to as a user, a User Equipment (UE), an access terminal, a UE unit, a UE station, a mobile station, a mobile radio station, a remote station, a remote terminal, a mobile device, a UE terminal, a wireless communication device a UE agent, a UE apparatus, or the like, which will not be not limited in the embodiment of the present disclosure.

It should be understood that the communication system described above is for the purpose of more clearly illustrating the technical scheme of the embodiment of the present disclosure, and does not constitute a limitation on the technical scheme provided by the embodiment of the present disclosure. Those having ordinary skill in the art can know that with the evolution of system architectures and the emergence of new business scenarios, the technical scheme provided by the embodiment of the present disclosure is also applicable to similar communication systems.

It could be understood that in order to better transmit data or signals, the first communication device needs to acquire measurement parameters, where the measurement parameters of a reference signal (RS) by the first communication device may include channel state information (CSI) or other parameters for depicting a channel, where the channel state information includes a CSI-RS Resource Indicator (CRI), a Synchronization Signal Block Resource Indicator (SSBRI), an L1 Reference Signal Received Power (L1-RSRP or RSRP), a differential RSRP, an L1 Signal-to-Interference Noise Ratio (L1-SINR or SINR), a differential L1-SINR, a Reference Signal Received Quality (RSRQ), a Channel Quality Indicator (CQI), a Precoding Matrix Indicator (PMI), a Layer Indicator (LI), a Rank Indicator (RI), and precoding information.

The precoding information includes type I precoding information, where the type I precoding information is precoding information formed based on a traditional channel characteristic matrix or a quantized value of the characteristic matrix, for example, precoding information implemented by a codebook-based method, and the precoding matrix indicator is one of codebook-based precoding information. The precoding information further includes precoding information implemented by a non-codebook-based method, for example, type II precoding information.

In an embodiment, channel state information matching channel information can be transmitted between the first communication device (such as the terminal) and the second communication device (such as the base station) through the type I precoding information. For example, when the type I precoding information is precoding information implemented by a codebook-based method, the codebook may be an N-antenna codebook in LTE, where N=2, 4, 8, 12, 16, 24, 32, etc., or may be a type I codebook, a type II codebook, a type II port selection codebook, an enhanced type II codebook, an enhanced type II selection codebook or a Further enhanced type II selection codebook in NR (New Radio), where the codebook includes L codewords, and has the main idea that the base station and the terminal save the L codewords in advance according to a prescribed formula, table or dictionary, where L is an integer greater than 1, and generally, L is greater than the number of transmitting antennas. The codeword may be a vector or may be a matrix. When the codeword is a matrix, the matrix includes r columns, and each column is also a vector, where all columns of the matrix can be orthogonal to each other.

In an embodiment, the vector constituting the codeword may be a 0-1 vector, that is, only one value of the entire vector is 1, and the other values are zero; alternatively, the vector constituting the codeword may be a DFT (Discrete Fourier Transform) vector; alternatively, the vector constituting the codeword can be obtained by calculating a tensor product (Kronecker product) of two or more DFT vectors; alternatively, the vector constituting the codeword can be obtained by multiplying two or more DFT vectors by different phase rotations; alternatively, the vector constituting the codeword can be obtained by calculating a tensor product (Kronecker product) of two or more DFT vectors and multiplying the two or more DFT vectors by a phase rotation.

In an embodiment, the base station or the terminal can find a codeword that best matches channel information of the terminal by searching L codewords, and take the codeword as the optimal codeword to transmit data or signals, where the codeword that matches the channel information includes at least one of a codeword with the minimum distance from the channel information, a codeword with the maximum correlation with the channel information, a codeword with the minimum distance from an optimal right singular vector or matrix of the channel information, a codeword with the maximum correlation with the optimal right singular vector or matrix of the channel information, or a codeword with the maximum signal-to-interference noise ratio calculated from the channel information.

In an embodiment, the antenna may be a physical antenna, a logical antenna, a transmitting antenna or a receiving antenna; or may be an antenna pair including a transmitting antenna and a receiving antenna; or be a uniform linear array; or may be a uniform planar array, for example, an array element/antenna including g Ng rows and Mg columns, where Ng and Mg are both positive integers; or may be a uniform circular array, a non-uniform linear array, a non-uniform planar array, a non-uniform circular array, a directional antenna, an omnidirectional antenna, a dual-polarized antenna, a single-polarized antenna, or the like, which will not be listed here one by one. In addition, ports and antennas can be interchangeable concepts.

In an embodiment, channel state information matching channel information can be transmitted between the first communication device (such as the terminal) and the second communication device (such as the base station) through type II precoding information, where the type II precoding information is channel state information obtained based on AI, the base station and the terminal obtain the channel state information through an encoder of an autoencoder. The autoencoder includes the encoder and a decoder, where the encoder is at the terminal side and the decoder is at the base station side. The terminal compresses the obtained channel information H through the encoder to obtain compressed channel information H1, and quantizes the compressed channel information H1 and feeds the quantized H1 back to the base station; after receiving the quantized H1, the base station dequantizes the quantized H1 to obtain compressed channel information H1, and then inputs the compressed channel information H1 into the decoder; and the decoder decompresses the compressed channel information H1 to restore H.

The above-mentioned H may include K0 elements. The terminal selects K elements from H as H1, quantizes the H1 and feeds the quantized H1 back to the base station; the base station receives the K quantized elements and dequantizes the K elements, and inputs the dequantized K elements into a network model; and the network model outputs K0 elements to restore H, thereby obtaining a precoding matrix of H, where K and K0 are integers greater than 1, and K<K0. H1 obtained by a compressor or K elements selected from H are both type II precoding information. Moreover, for the sake of simplicity, the quantized H1 is also referred to as type II precoding information.

In addition, the type II precoding information may also be a precoding matrix different from the type I precoding information, which is generated by other non-AI methods; alternatively, the type II precoding information may also be a precoding matrix other than the type I precoding information, which is not specifically limited here.

The channel information in the above-mentioned various embodiments is information for describing a channel environment between communication devices obtained according to a reference signal (such as a CSI-RS). The channel information may be a time domain channel matrix or may be a frequency domain channel matrix. The channel information is a complex matrix (i.e., channel matrix). The size of the channel matrix is related to the number of transmitting antennas Nt, the number of receiving antennas Nr, and Resource Elements (RE). For example, at least one channel matrix of Nr*Nt is provided on a physical resource block.

In an embodiment, beam parameter information may be an L1 reference signal received power or differential RSRP corresponding to at least one beam; or may be an L1 signal-to-interference noise ratio or differential SINR corresponding to at least one beam; or may be a reference signal receiving quality corresponding to at least one beam; or may be a beam angle (i.e., at least one of an Angle Of Arrival (AOA), a Zenith angle Of Arrival (ZOA), an Angle Of Departure (AOD), or a Zenith angle Of Departure (ZOD), etc., where AOA is also called a horizontal angle of arrival, ZOA is also called a vertical angle of arrival, AOD is also called a horizontal angle of departure, and ZOD is also called a vertical angle of departure) corresponding to at least one beam; or may be a transmitting beam index corresponding to at least one beam; or may be a receiving beam index corresponding to at least one beam; or may be a transmitting beam and receiving beam pair index corresponding to at least one beam, where the transmitting beam and receiving beam pair index is referred to as a beam pair index or a beam pair for short; or may be a Beam Domain Receive Power Map (BDRPM) corresponding to at least one beam; or may be a channel state information-reference signal resource indicator corresponding to at least one beam; or may be a synchronization signal block resource indicator or other reference signal resource indicator corresponding to at least one beam, such as SRSRI; or may be a combination of at least two of beam parameter information such as RSRP, RSRQ, SINR, beam angle, transmitting beam index, receiving beam index, beam pair index, CRI, SSBRI, etc. corresponding to at least one beam; or may be a linear value of any one of RSRP, RSRQ or SINR; or may be a logarithmic value (i.e., a decibel value (DB)) of any one of RSRP, RSRQ, or SINR.

In an embodiment, location parameter information includes but is not limited to transmission time related information, angle related information, received signal quality related information, and multipath related information, where the transmission time related information includes at least one of a Time Of Arrival ( TOA), a Reference Signal Time Difference (RSTD), a Relative Time Of Arrival (RTOA), an Rx-Tx time difference, or a Tx-Rx time difference; the angle related information includes at least one of an angle of arrival, an angle of departure, a zenith angle of arrival or an azimuth angle of arrival, where the angle of departure includes a zenith angle of departure and an Azimuth angle Of Departure (AOD); the received signal quality related information includes at least one of a reference signal received power, an SINR, a CQI, or an SNR; and the multipath related information includes at least one of the following information: a number of added paths, a relative delay of the added paths, a power of added multipaths, a time domain response of the added multipaths, real and imaginary parts of the time domain response of the added multipaths, a path with the strongest power, a path with the highest power, an N path with the strongest power, a time and/or RSRP corresponding to the N path with the strongest power, an N path within a time window, a time and/or RSRP corresponding to the N path within the time window, an N path greater than a threshold, a time and/or RSRP corresponding to the N path greater than the threshold, or a line-of-sight or non-line-of-sight indicator (LoS/NLoS indicator), etc.

In an embodiment, the above-mentioned beam parameter information or location parameter information may be a subset of the channel state information, that is to say, the beam parameter information belongs to the channel state information, and the location parameter information belongs to the channel state information. The channel state information belongs to the measurement parameters.

In another embodiment, the measurement parameters, the channel state information, and the beam parameter information all belong to measurement results, or processing results, or generation results.

In an embodiment, in order to transmit the measurement results, such as the channel state information, at the physical layer, the terminal and the base station define a report (for example, a CSI report or CSI report congfig), where the report defines at least one of a time frequency resource for feeding back CSI, a report quality report Quantity included in the CSI, a time domain type report ConfigType of CSI feedback, a channel measurement resource, an interference measurement resource, a measured bandwidth size, or the like. The CSI report can be transmitted on an uplink transmission resource. The uplink transmission resource includes a Physical Uplink Shared Channel (PUSCH) and a Physical Uplink Control Channel (PUCCH), and the CSI report may also include time domain characteristics. Therefore, the CSI report may be a periodic CSI report (P-CSI), an aperiodic CSI report (AP-CSI) or a semi-persistent CSI report (SP-CSI).

Generally speaking, the number of bits transmitted by the P-CSI is relatively small and the P-CSI is generally transmitted on the PUCCH, the number of bits transmitted by the A-CSI is larger and the A-CSI is generally transmitted on the PUSCH, while the SP-CSI can be transmitted based on the PUSCH or can be transmitted based on the PUCCH. The P-CSI transmitted based on the PUCCH is generally configured by means of high-level signaling (Radio Resource Control, RRC), the SP-CSI transmitted based on the PUCCH is also configured, activated or deactivated by means of high-level signaling (RRC and/or Media Access Control control element (MAC CE)), and the SP-CSI transmitted based on the PUSCH is activated or deactivated by means of physical layer signaling (Downlink Control Information, DCI). A-CSI is triggered by DCI. The DCI is generally transmitted on a physical downlink control channel (PDCCH).

In the embodiment of the present disclosure, feeding back channel state information (CSI) may also be referred to as transmitting CSI or sending CSI, for example, feeding back or transmitting CSI by carrying CSI on an uplink transmission resource, where the uplink transmission resource and the corresponding CSI are both indicated by a channel state information report (i.e., CSI report).

In an embodiment, the base station configures, through high-layer signaling and/or physical layer signaling, NC CSI reports that need to be fed back to the base station for the terminal. Each CSI report has an identity (ID), which is called CSI report ID. The terminal can select MC CSI reports from the NC CSI reports according to its own computing capability or processing capability and the requirements of the base station, and feed back at least one CSI report among the MC CSI reports according to an uplink feedback resource, where NC and MC are positive integers and MC<=NC.

Feedback resources of at least two CSI reports among the MC CSI reports that need to be fed back are conflicting, where the conflict between the feedback resources of the two CSI reports means that at least one symbol and/or at least one subcarrier in the corresponding transmission resource (such as the PUCCH or the PUSCH) for feeding back the two CSI reports is the same.

In the embodiment of the present disclosure, feeding back or transmitting a CSI report refers to feeding back channel state information of a CSI report configuration. For example, feeding back or transmitting the CSI report refers to transmitting the to-be-transmitted content of the CSI report configuration through a transmission resource.

In an embodiment, information, such as channel state information or data sets, can be transmitted via a higher layer. A transmission resource of uplink data can be transmitted via the high layer in two scheduling modes, namely, dynamic grant (DG) and configured grant (CG). The configured grant includes two types: Configured Grant Type1 and Configured Grant Type2.

For example, the terminal can transmit data through parameters determined by the Configured Grant Type1. The base station can transmit parameters such as a time frequency resource location of the Configured Grant Type1, a period of CG resources, a number of hybrid automatic repeat request (HARQ) processes using the CG resources, MCS, etc. to the terminal through RRC signaling, and the terminal stores the parameters as configured uplink grant. After configuring the Grant Type1 through the RRC signaling, the terminal can transmit the uplink data adopting the transmission resource corresponding to the configured grant.

For example, the terminal can transmit data through parameters determined by the Configured Grant Type2. The base station can transmit parameters such as a period of CG resources of the Configured Grant Type2, a number of HARQ processes using the CG resources, and an MCS table used to the terminal through RRC signaling. However, parameters such as a time frequency resource location, an MCS index value, etc. are transmitted to the terminal by a network device through DCI and are stored by the terminal as configured uplink grant. The base station activates or deactivates an operation for the terminal to transmit uplink data through physical layer signaling.

In one feasible implementation, the indicators of various parameters in all the above embodiments may also be called indexes or identifiers (ID), which are equivalent concepts. For example, resources of a wireless system may include, but are not limited to, indexes corresponding to a reference signal resource, a reference signal resource group, a reference signal resource configuration, a channel state information report, a CSI report set, a terminal, a base station, a panel, a neural network, a neural sub-network, a neural network layer, a precoding matrix, a beam, a transmission mode, a sending mode, a receiving mode, a module, a model, a functional module, and the like.

In an embodiment, the first communication device can communicate one or a group of resource identifiers to/from the second communication device through various high-level signaling and/or physical layer signaling. When the first communication device is a terminal and the second communication device is a base station, the first communication device can feed back one or a group of resource identifiers to the second communication device through various high-level signaling and/or physical layer signaling, and the second communication device can also indicate one or a group of resource identifiers to the first communication device through various high-level signaling and/or physical layer signaling.

The high-level signaling may include but is not limited to Radio Resource Control (RRC), Media Access Control control element (MAC CE) and other signaling other than physical layer signaling, such as LPP (LTE Positioning Protocol) high-layer signaling, NRPPa (NR Positioning Protocol A) high-layer signaling, and LPPa (LTE Positioning Protocol A) high-layer signaling, where LPP is also applied to the NR positioning protocol. The physical layer signaling may be physical layer signaling transmitted on a Physical Downlink Control Channel (PDCCH) or may be physical layer signaling transmitted on a Physical Uplink Control Channel (PUCCH).

In an embodiment, a time slot may be a slot or a mini slot. One slot or mini slot includes at least one symbol, where the symbol may refer to a subframe, a frame or a time unit in a slot, for example, may be an Orthogonal Frequency Division Multiplexing (OFDM) symbol, a Single-Carrier Frequency Division Multiple Access (SC-FDMA) symbol, an Orthogonal Frequency Division Multiple Access (OFDMA) symbol, or the like.

In an embodiment, in order to calculate channel state information or perform channel estimation, mobility management, positioning, etc., the first communication device or the second communication device is required to send a Reference Signal (RS), where the reference signal includes but is not limited to a Channel-State Information reference signal (CSI-RS), and the channel-state information reference signal may include a Zero Power CSI-RS (ZP CSI-RS) and a Non-Zero Power CSI-RS (NZP CSI-RS), a Channel-State Information-Interference Measurement Signal (CSI-IM), a Sounding Reference Signal (SRS), a Synchronization Signal Block (SSB), a Physical Broadcast Channel (PBCH), and a Synchronization Signal Block/Physical Broadcast Channel (SSB/PBCH). The NZP CSI-RS can be used to measure a channel or interference, and the CSI-RS can also be used for tracking. The CSI-RS used for tracking is called a CSI-RS for Tracking (TRS), the CSI-IM is generally used to measure interference, and the SRS is used to measure an uplink channel. In addition, a Resource Element (RE) set included in the time frequency resource for transmitting the reference signal is called a reference signal resource, such as CSI-RS resource, SRS resource, CSI-IM resource and SSB resource; and the SSB includes a synchronization signal block and/or a physical broadcast channel.

In an embodiment, in order to save signaling overhead, etc., a plurality of reference signal resources can be divided into a plurality of sets (such as CSI-RS resource set, CSI-IM resource set and SRS resource set). A reference signal resource set includes at least one reference signal resource, and the plurality of reference signal resource sets may all come from the same reference signal resource (such as CSI-RS resource setting and SRS resource setting, where the CSI-RS resource setting can be combined with CSI-IM resource setting, both referred to as CSI-RS resource setting), and parameter information is configured through the reference signal resource.

In an embodiment, the base station can configure measurement resource information, where the measurement resource information is configured to acquire various measurement parameters such as channel state information, etc. The measurement resource information includes C_{N} pieces of Channel Measurement Resource (CMR) information and/or C_{M} pieces of Interference Measurement Resource (IMR) information, where both C_{N} and C_{M} are positive integers. The base station can configure the measurement resource information in a 'report config' or 'reporting setting'.

In one feasible implementation, a channel measurement resource information may include at least one channel reference signal resource, such as at least one CSI-RS resource setting or at least one SRS resource setting; and an interference measurement resource information may include at least one interference reference signal resource, such as at least one CSI-IM resource setting.

In one feasible implementation, a channel measurement resource information may include at least one channel reference signal resource set, such as at least one CSI-RS resource set or at least one SRS resource set, and an interference measurement resource information may include at least one interference reference signal resource set, such as at least one CSI-IM resource set.

In one feasible implementation, a channel measurement resource information may include at least one channel reference signal resource, such as at least one CSI-RS resource or at least one SRS resource, and an interference measurement resource information may include at least one interference reference signal resource, such as at least one CSI-IM resource.

In an embodiment, a beam includes a transmitting beam, a receiving beam, a receiving beam and transmitting beam pair, and a transmitting beam and receiving beam pair.

It could be understood that the beam can be understood as a resource, for example, a reference signal resource, a reference signal resource set, a sender spatial filter, a receiver spatial filter, a spatial filter, a spatial reception parameter, a sender precoding, a receiver precoding, an antenna port, an antenna weight vector, an antenna weight matrix, or the like.

Correspondingly, the beam index can be replaced by a resource index (e.g., a reference signal resource index) because the beam can be bound to some time-frequency code resources in transmission.

The beam may also be a transmission (sending/receiving) mode, which may include space division multiplexing, frequency domain/time domain diversity, beamforming, etc. In addition, the base station can perform Quasi Co-Location (QCL) configuration on two reference signals and inform the terminal to describe channel characteristics, where parameters involved in the quasi co-location at least include a Doppler spread, a Doppler shift, a delay spread, an average delay, an average gain and a spatial parameter (Spatial Rx parameter or Spatial parameter). The spatial parameter may include a spatial reception parameter, a beam angle, a spatial correlation of a receiving beam, an average delay, and a correlation of a time-frequency channel response (including phase information). Spatial filtering may be at least one of a DFT vector, a precoding vector, a DFT matrix or a precoding matrix, or may be a vector formed by a linear combination of a plurality of DFT, or may be a vector formed by a linear combination of a plurality of precoding vectors. It will be appreciated that vector and vector quantity may be interchangeable concepts.

In addition, a beam pair may be a combination including one transmitting beam and one receiving beam.

Referring to Fig. 2, which is a flowchart of a data set sending method provided by an embodiment of the present disclosure. The data set sending method can be applied to a first communication device, such as the receiving side device shown in Fig. 1. The data set sending method includes but is not limited to step S110, step S120 and step S130.

At S110, a first data set is acquired.

In this step, the first data set includes L0 samples, which are also called parameter sets. Each parameter set includes at least one of at least one first parameter subset and/or at least one second parameter subset. In an embodiment, the first parameter subset is also called a feature of a sample, and the second parameter subset is also called a label of the sample. In an embodiment, a sample includes M0 labels and M1 features, where M0 and M1 are non-negative integers.

In an embodiment, a sample may include a feature and a label, such as a sample in supervised learning; alternatively, a sample includes only one feature and no label, such as a sample in unsupervised learning; alternatively, a sample includes a plurality of features and one label, such as a sample in a multi-input single-output supervised learning network model; alternatively, a sample includes one feature and a plurality of labels, such as a sample in a single-input multi-output supervised learning network model.

The feature may be an array and the label may also be an array. The array may be a vector, a matrix, or a tensor greater than two dimensions. Each element in the array may be a discrete value, or may be a real value, for example, a real value between 0 and 1, or a real value between -0.5 and 0.5.

The feature and/or label of the sample includes channel matrix information which includes channel state information and/or beam metric parameters; alternatively, the feature and/or label of the sample includes only channel state information; alternatively, the feature and/or label of the sample includes only beam metric parameters.

In an embodiment, it is necessary to normalize the elements in the array corresponding to the label or feature so that the network model converges faster. Normalization means normalizing the values of elements in an array to a value greater than or equal to a and less than or equal to b. In an example, a=-0.5, b=0.5; and in an example, a=0, b=1.

For example, the elements in the array can be divided by a number with the largest absolute value among the elements in the array to achieve normalization; alternatively, the elements in the array can be divided by a variance in the elements in the array to achieve normalization; alternatively, the elements in the array can be divided by a fixed value (such as the maximum value of all elements in all samples) to achieve normalization; alternatively, the elements in the array can be divided by a statistical value (such as a statistical variance of all elements in all samples) to achieve normalization. For index values, such as beam index, CRI, SSBRI, etc., normalization can be achieved through One-Hot Encoding.

It could be understood that, in an embodiment, in order to acquire a first data set, a second communication device sends a reference signal to the first communication device, and after receiving the reference signal, the first communication device measures the received reference signal to acquire the first data set.

At S120, a second data set is acquired from the first data set according to first sample parameters and/or second sample parameters.

The second data set includes L1 samples; each of the first sample parameters and the second sample parameters is a parameter corresponding to a sample in the first data set, and each sample or a group of samples in the first data set corresponds to at least one first sample parameter and/or at least one second sample parameter. In addition, the first sample parameter is configured to select samples which meet a preset condition from the L0 samples; the second sample parameter is configured to rank the samples which meet the preset condition and acquire the second data set from the ranked samples, for example, select the top-ranked L1 samples to form the second data set, where L0 and L1 are positive integers, and L1 is not greater than L0.

In an embodiment, the first sample parameters and/or the second sample parameters are first sample parameters and/or second sample parameters corresponding to at least one sample.

In some embodiments, the fact that a sample meets a preset condition also means that this sample is a valid sample.

In some embodiments, each sample also corresponds to at least one first sample parameter. The first sample parameters may include one or more parameters in a first parameter subset, or may include one or more parameters in a second parameter subset, or may include parameters for describing sample quality, characteristics, application scenarios, channel characteristics, etc., such as a reference signal received power, a signal-to-noise ratio, a signal-to-interference noise ratio, a confidence, an inference time, a measurement time, a movement velocity, etc. for evaluating sample quality. In some embodiments, the first sample parameters may be first sample parameters corresponding to one sample, or may be first sample parameters corresponding to a group of samples. In an example, the parameters corresponding to the first sample, such as RSRP, SINR, CQI, etc., may refer to the link quality of the terminal at the corresponding moment when the sample is collected, which may be the link quality of a broadband, and one sample corresponds to only one RSRP, SINR, CQI. The probability and confidence here may also be an evaluation metric for the label of this sample. One sample corresponds to one confidence or probability.

In an example, one sample or a group of samples corresponds to at least one second sample parameter. The second sample parameters include but are not limited to: a signal-to-interference noise ratio, a reference signal received power, a channel rank, a modulation and coding scheme, a channel quality indicator, a movement velocity, a bit error rate and a block error rate.

Herein, unless otherwise specified, the signal-to-interference noise ratio includes a signal to interference ratio, a signal to noise ratio, a signal to interference ratio, etc. High-quality samples may also be called qualified samples or valid samples.

In an embodiment, the first communications device can measure a reference signal resource set corresponding to each sample to obtain first sample parameters and/or second sample parameters.

At S130, the second data set is sent.

For example, assuming L0=100, L1=10, if the first communication device acquires a first data set including 100 samples, then a second data set including 10 samples is acquired from the first data set according to the first sample parameters and/or the second sample parameters, and the second data set is sent to the second communication device.

In this embodiment, by adopting the data set sending method including the above-mentioned steps S110 to S 130, in the embodiment of the present disclosure, a first data set including L0 samples is acquired, then a second data set including L1 samples is acquired from the first data set according to first sample parameters and/or second sample parameters, and finally the second data set is sent, where L0 and L1 are positive integers, and L1 is not greater than L0, that is to say, the first communication device can screen out a high-quality or qualified second data set from the first data set through the first sample parameters and/or the second sample parameters, thereby improving the training effect of a model and then improving the performance of the model.

In an embodiment, acquiring the second data set from the first data set according to the first sample parameters may include: acquiring a first threshold group, and acquiring the second data set from the first data set according to the first sample parameters corresponding to at least one sample and the first threshold group.

The at least one sample is at least one sample in the first data set, the first sample parameters may include at least one parameter, and correspondingly, the first threshold group may include at least one threshold group, and one threshold group may include one or more threshold values, where each parameter corresponds to one first threshold group. The values of the threshold groups corresponding to different parameters may be identical or may be different, which will not be specifically limited here.

The following are some embodiments of using a threshold value to determine whether a sample is valid:
In an example, the first sample parameter is L1-RSRP, and the first threshold value is RSRP0. In this case, if L1-RSRP is less than or equal to RSRPO, it can be determined that the sample does not meet a preset condition or is an invalid sample. Otherwise, if L1-RSRP is greater than RSRPO, it can be determined that the sample meets the preset condition or is a valid sample. In another example, the first sample parameter is L1-SINR, and the first threshold value is SINR0. In this case, if L1-SINR is less than or equal to SINRO, it can be determined that the sample does not meet the preset condition or is an invalid sample. Otherwise, if L1-SINR is greater than SINRO, it can be determined that the sample meets the preset condition or is a valid sample. In yet another example, the first sample parameter is CQI, and the first threshold value is CQI0. In this case, if CQI is less than or equal to CQIO, it can be determined that the sample does not meet the preset condition or is an invalid sample. Otherwise, if CQI is greater than CQIO, it can be determined that the sample meets the preset condition or is a valid sample. In yet another example, the first sample parameter is MCS, and the first threshold value is MCS0. In this case, if MCS is less than or equal to MCS0, it can be determined that the sample does not meet the preset condition or is an invalid sample. Otherwise, if the MCS is greater than MCS0, it can be determined that the sample meets the preset condition or is a valid sample. In yet another example, the first sample parameter is movement velocity V, and the first threshold value is V0. In this case, if V is greater than or equal to V0, it can be determined that the sample does not meet the preset condition or is an invalid sample. Otherwise, if V is less than V0, it can be determined that the sample meets the preset condition or is a valid sample. In yet another example, the first sample parameter is confidence Z, and the first threshold value is Z0. In this case, if Z is less than or equal to Z0, it can be determined that the sample does not meet the preset condition or is an invalid sample. Otherwise, if Z is greater than Z0, it can be determined that the sample meets the preset condition or is a valid sample. In yet another example, the first sample parameter is predicted probability P, and the first threshold value is P0. In this case, if P is less than or equal to P0, it can be determined that the sample does not meet the preset condition or is an invalid sample. Otherwise, if P is greater than P0, it can be determined that the sample meets the preset condition or is a valid sample. In yet another example, the first sample parameter is measurement time MT, and the first threshold value is MT0. In this case, if MT is less than or equal to MT0, it can be determined that the sample does not meet the preset condition or is an invalid sample. Otherwise, if MT is greater than MT0, it can be determined that the sample meets the preset condition or is a valid sample.

In yet another example, the first sample parameter is inference time T, and the first threshold value is T0. In this case, if T is less than T0, it can be determined that the sample meets the preset condition or is a valid sample. Otherwise, if T is greater than T0, it can be determined that the sample does not meet the preset condition or is an invalid sample. In yet another example, the first sample parameter is throughput TH, and the first threshold value is TH0. In this case, if TH is less than or equal to TH0, it can be determined that the sample does not meet the preset condition or is an invalid sample. Otherwise, if TH is greater than TH0, it can be determined that the sample meets the preset condition or is a valid sample. In yet another example, the first sample parameter is bit error ratio BER, and the first threshold value is BER0. In this case, if BER is greater than or equal to BERO, it can be determined that the sample does not meet the preset condition or is an invalid sample. Otherwise, if BER is less than BERO, it can be determined that the sample meets the preset condition or is a valid sample. In yet another example, the first sample parameter is block error rate BLER, and the first threshold value is BLER0. In this case, if BLER is greater than or equal to BLER0, it can be determined that the sample does not meet the preset condition or is an invalid sample. Otherwise, if BLER is less than BERO, it can be determined that the sample meets the preset condition or is a valid sample. In these embodiments or examples, a sample that does not meet the quality requirements may also be referred to as a sample that does not meet the requirements, or a sample not meeting the requirements. It means that the sample is not suitable for model training or for model monitoring, or is not very suitable for model inferring. Therefore, the terminal may not feed back the sample. That is to say, the sample that does not meet the requirements cannot be included in the data set.

In some examples, it is necessary to determine whether a sample meets requirements (such as quality requirements) according to K first sample parameters and K first sample parameter thresholds simultaneously. It is considered that the sample meets the requirements only when each type I first sample parameter is greater than or equal to a threshold value corresponding to the type I first sample parameter or each type II first sample parameter is less than or equal to the threshold value. For example, in one instance, it is considered that the sample meet the condition only when at least two of the following conditions are met simultaneously: L1-RSRP corresponding to the sample is greater than or equal to RSRPO, or L1-SINR corresponding to the sample is greater than or equal to SINRO, or CQI corresponding to the sample is greater than or equal to threshold CQIO, or MCS corresponding to the sample is greater than or equal to threshold MCS0, or probability P corresponding to the sample is greater than or equal to threshold P0, or confidence Z corresponding to the sample is greater than or equal to threshold Z0, or throughput TH corresponding to the sample is greater than or equal to threshold TH0, or inference time T corresponding to the sample is less than or equal to T0, or movement velocity V corresponding to the sample is less than or equal to threshold V0, or measurement time MT corresponding to the sample is less than or equal to threshold MT0, or bit error rate BER corresponding to the sample is less than or equal to threshold BERO, or block error rate BLER corresponding to the sample is less than or equal to BLER0.

The first sample parameters X (mainly referring to the type I first sample parameters, such as Reference Signal Received Power (RSRP), Signal-to-Interference Noise Ratio (SINR), Modulation and Coding Scheme (MCS), Channel Quality Indicator (CQI), confidence, prediction probability, cosine similarity, location parameter information, beam parameter information, throughput), have a second threshold value Y1 and a third threshold value Y2, and Y1 is less than Y2. In an example, if X is less than or equal to Y1, it can be determined that the sample does not meet the preset condition in sample quality or is an invalid sample. Otherwise, if X is greater than or equal to Y2, it can be determined that the sample meets the preset condition in sample quality or is a valid sample. In another example, if X (mainly referring to the type II first sample parameters, including but not limited to at least one of the following: a movement velocity, a measurement time, an inference time, a bit error rate or a block error rate) is greater than or equal to Y2, it can be determined that the sample does not meet the preset condition in sample quality or is an invalid sample. Otherwise, if X is less than or equal to Y1, it can be determined that the sample meets the preset condition in sample quality or is a valid sample.

In an example, if the first sample parameter L1-RSRP is less than or equal to a second threshold value RSRP2, it is determined that the sample does not meet the preset condition or is an invalid sample. If L1-RSRP is greater than or equal to a third parameter threshold value RSRP3, it is determined that the sample meets the preset condition or is a valid sample, where RSRP2 is less than RSRP3. In another example, if the first sample parameter L1-SINR is less than or equal to a second threshold value SINR2, it is determined that the sample does not meet the preset condition or is an invalid sample. If L1-SINR is greater than or equal to a third parameter threshold value SINR3, it is determined that the sample meets the preset condition or is a valid sample, where SINR2 is less than SINR3. In yet another example, if the first sample parameter CQI is less than or equal to a second threshold value CQI2, it is determined that the sample does not meet the preset condition or is an invalid sample. If CQI is greater than or equal to a third parameter threshold value CQI3, it is determined that the sample meets the preset condition or is a valid sample, where CQI2 is less than CQI3. In still another example, if the first sample parameter MCS is less than or equal to a second threshold value MCS2, it is determined that the sample does not meet the preset condition or is an invalid sample. If MCS is greater than or equal to a third parameter threshold value MCS3, it is determined that the sample meets the preset condition or is a valid sample, where MCS2 is less than MCS3. In still another example, when the first sample parameter is the movement velocity V, if V is less than or equal to a second threshold value V2, it is determined that the sample meets the preset condition or is a valid sample. If V is greater than or equal to a third parameter threshold value V3, it is determined that the sample does not meet the preset condition or is an invalid sample, where V2 is less than V3. In still another example, when the first sample parameter is the probability P corresponding to the sample, if P is less than or equal to a second threshold value P2, it is determined that the sample does not meet the preset condition or is an invalid sample. If P is greater than or equal to a third parameter threshold value P3, it is determined that the sample meets the preset condition or is a valid sample, where P2 is less than P3. In still another example, when the first sample parameter is the confidence Z, if Z is less than or equal to a second threshold value Z2, it is determined that the sample does not meet the preset condition or is an invalid sample. If Z is greater than or equal to a third parameter threshold value Z3, it is determined that the sample meets the preset condition or is a valid sample, where Z2 is less than Z3.

In still another example, when the first sample parameter is the inference time T, if T is greater than or equal to a second threshold value T3, it is determined that the sample does not meet the preset condition or is an invalid sample. If T is less than or equal to a third parameter threshold value T2, it is determined that the sample meets the preset condition or is a valid sample, where T2 is less than T3. In still another example, when the first sample parameter is the measurement time MT corresponding to the sample, if MT is greater than or equal to a second threshold value MT3, it is determined that the sample does not meet the preset condition or is an invalid sample. If MT is less than or equal to a third parameter threshold MT2, it is determined that the sample meets the preset condition or is a valid sample, where MT2 is less than MT3.

It should be noted that in some examples, the first sample parameter X is between Y1 and Y2. In this case, whether the sample meets the requirements needs to be further determined based on the capability of the terminal, the capability or complexity and functionality of the model, etc.

In an embodiment of the present disclosure, a high-quality or qualified second data set can be screened out from the first data set according to the first sample parameters and the first threshold group.

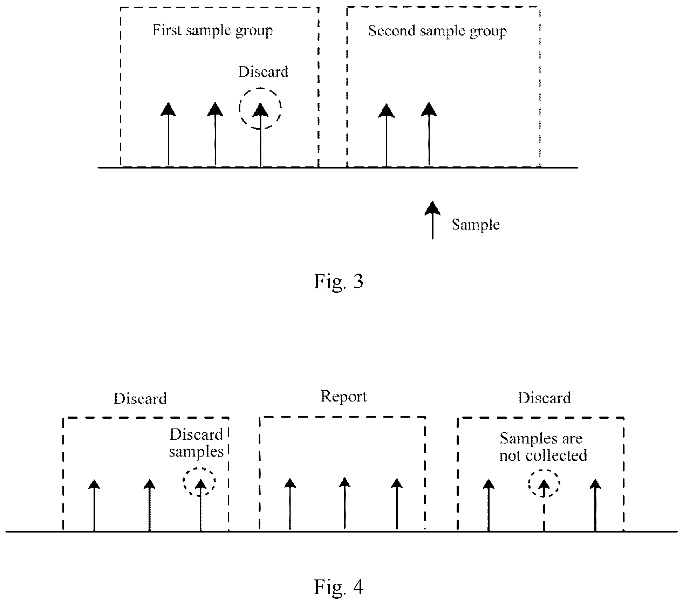

For example, referring to Fig. 3, each parameter of the first sample parameters can be compared with a corresponding threshold parameter in the first threshold group. If there is a parameter that does not meet the threshold parameter, the sample corresponding to the parameter is discarded, and a set of remaining samples in the first data set is taken as the second data set. It could be understood that in the embodiment of the present disclosure, a sample with poor quality can be screened out from the first data set according to the first sample parameters and the first threshold group and discarded, thereby obtaining a high-quality or qualified second data set. For example, each parameter of the first sample parameters can be compared with a corresponding threshold parameter in the first threshold group. If there is a parameter which meets the threshold parameter, the sample corresponding to the parameter is included, that is, incorporated in the second data set. It could be understood that in the embodiment of the present disclosure, a high-quality or qualified sample can be screen out from the first data set according to the first sample parameters and the first threshold group.

It is worth noting that in frequency domain prediction based on an artificial intelligence algorithm, a deployed artificial intelligence model usually predicts, based on the channel measurement results of a plurality of frequency domains (i.e., observation window), channel state information or beam information of the other one or more frequency domains (i.e., prediction window). Here, a measurement result obtained by measuring a reference signal resource set once by the first communication device (such as the terminal) within one frequency domain is called a sample (or a frequency domain parameter subset).

For the training and fine-tuning of a frequency domain prediction model, a to-be-acquired data set mainly consists of two parts, namely model input data and model label data. The model input data consists of samples in a plurality of frequency domains within an observation window, and the model label data consists of samples in one or more frequency domains within a prediction window. The training of the frequency domain prediction model requires the complete collection of all samples in the same observation window and prediction window. If there is a sample with poor quality among these samples and the sample is discarded due to poor quality, or if a sample in a certain frequency domain is not collected for some reason (for example, a reference signal resource is not sent or measured), samples in all other relevant frequency domains should be discarded.

Therefore, as shown in Fig. 4, within any measurement window configured by the first communication device (such as the terminal) or the second communication device (such as the base station), if any sample is discarded, or the number of valid samples measured is less than a preset threshold value, all samples within the measurement window should not be reported, that is, all samples within the measurement window should not be transmitted to the first communication device.

Based on this, in an embodiment, the first data set may include at least one sample group, where the sample group includes K frequency-domain associated samples, where K is a positive integer. **In** this case, acquiring the second data set from the first data set according to the first sample parameters may include: acquiring a first threshold group, determining whether a sample group meets a preset condition according to the first sample parameters corresponding to at least one sample in the sample group and the first threshold group, and including the sample in the sample group which meets the preset condition in the second data set.

It could be understood that the sample group including K frequency-domain associated samples may be called an associated sample set.

**In** an embodiment, determining whether a sample group meets a preset condition according to the first sample parameters corresponding to at least one sample in the sample group and the first threshold group includes at least one of the following preset conditions: a number of valid samples in the sample group is greater than or equal to K1; alternatively, a ratio of the number of the valid samples in the sample group to the total number K of samples in the sample group is greater than or equal to a first preset ratio value; alternatively, a distance between a frequency domain location of a sample in the sample group and a frequency domain location of a sample adjacent to the sample in frequency domain location is less than N frequency domain units; alternatively, there are at least K2 valid samples in a first preset frequency domain segment before a sample in the sample group; alternatively, there are at least K3 valid samples in a second preset frequency domain segment after a sample in the sample group, where the frequency domain unit includes at least one of a subcarrier distance, a number of resource blocks, a number of sub-bands, or a number of central frequency bands.

In the embodiment of the present disclosure, K, K1, K2, K3, and N are positive integers, and K1, K2, and K3 are not greater than K. In addition, a sub-band is a part of a certain frequency band with specific characteristics. It could be understood that the valid samples are samples which meet the first threshold group, or samples that can acquire data (i.e., the data is valid). In addition, the first preset frequency domain segment and the second preset frequency domain segment can be set according to actual conditions, which will not be specifically limited here.

For example, a first threshold group is acquired, whether a number of valid samples in each sample group is greater than or equal to K1 is determined according to the first sample parameters and the first threshold group, and if the number of the valid samples in the sample group is greater than or equal to K1, the sample in the sample group which meets the preset condition is included in the second data set.

For example, assuming that the first data set includes a sample group A and a sample group B, where the sample group A includes 10 frequency-domain associated samples, that is, K_{A}=10, and the sample group B includes 7 frequency-domain associated samples, that is, K_{B}=7. If K1=5, then when a number of valid samples in the sample group A is determined to be 8 according to the first sample parameters and the first threshold group, and a number of valid samples in the sample group B is determined to be 6 according to the first sample parameters and the first threshold group, it can be seen that the sample group A and the sample group B simultaneously meet the preset condition. In this case, a second data set can be constructed with the 8 valid samples in the sample group A and the 6 valid samples in the sample group B. In this case, the second data set includes 14 samples.

Alternatively, assuming that the first data set includes a sample group A and a sample group B, where the sample group A includes 10 frequency-domain associated samples, that is, K_{A}=10, and the sample group B includes 7 frequency-domain associated samples, that is, K_{B}=7. If K1=4, then when a number of valid samples in the sample group A is determined to be 8 according to the first sample parameters and the first threshold group, and a number of valid samples in the sample group B is determined to be 3 according to the first sample parameters and the first threshold group, it can be seen that the sample group A meets the preset condition, while the sample group B does not meet the preset condition. In this case, the sample group B is discarded, and a second data set is constructed with the 8 valid samples in the sample group A. In this case, the second data set includes 8 samples.

For example, a first threshold group is acquired, whether a number of invalid samples in each sample group is greater than or equal to K4 is determined according to the first sample parameters and the first threshold group, and if the number of the invalid samples in the sample group is greater than or equal to K4, all samples in the sample group are discarded, where K4<K, for example, when K=10, the value of K4 may be 1, 2, and so on. It could be understood that the value of K4 can be determined by K. The invalid samples are samples that do not meet the first threshold group, or samples that cannot acquire data (i.e., the data is invalid).

For example, a first threshold group is acquired, whether a number of valid samples in each sample group is greater than or equal to K5 is determined according to the first sample parameters and the first threshold group, and if the number of the valid samples in the sample group is greater than or equal to K5, all samples in the sample group are included in the second data set, where K5<K, for example, when K=10, the value of K5 may be 6, 7, 8, 9, 10, and so on. It could be understood that the value of K5 can be determined by K. The valid samples are samples that can be effectively measured and meet the first threshold group.

For example, a first threshold group is acquired, a number valid samples in each sample group is determined according to the first sample parameters and the first threshold group, it is determined whether a ratio of the number of the valid samples to the total number K of samples in the sample group is greater than or equal to a first preset ratio value, and if the ratio of the number of the valid samples to the total number of the samples in the sample group is greater than or equal to the first preset ratio value, the sample in the sample group which meets the preset condition is included in the second data set.

When the first data set includes a plurality of sample groups, there may be a plurality of first preset ratio values, for example, different sample groups correspond to different first preset ratio values, or different sample groups correspond to the same first preset ratio value. Alternatively, when the first data set includes a plurality of sample groups, there may be only one first preset ratio value, that is, one first data set corresponds to one first preset ratio value. In addition, the first preset ratio value can be set according to actual conditions, which will not be specifically limited here.

For example, assuming that the first data set includes a sample group A and a sample group B, where the sample group A includes K_{A} frequency-domain associated samples (i.e., the total number of samples in the sample group A is K_{A}), the sample group B includes K_{B} frequency-domain associated samples (i.e., the total number of samples in the sample group B is K_{B}), a first preset ratio value corresponding to the sample group A is N₁, and a first preset ratio value corresponding to the sample group B is N₂. If a number of valid samples in the sample group A is determined to be L_{A} according to the first sample parameters and the first threshold group, where L_{A}/K_{A}>=N₁, the samples in the sample group A may be included in the second data set. Similarly, if a number of valid samples in the sample group B is determined to be L_{B} according to the first sample parameters and the first threshold group, where L_{B}/K_{B}>=N₂, the samples in the sample group B may also be included in the second data set. The values of N₁ and N₂ may be identical or different.

For example, a first threshold group is acquired, a number of invalid samples in a sample group is determined according to the first sample parameters and the first threshold group, and if a ratio of the number of the invalid samples to the total number of samples in the sample group is greater than or equal to a second preset ratio value, all samples in the sample group are discarded. The second preset ratio value can be set according to actual conditions, which will not be specifically limited here.

For example, a first threshold group is acquired, it is determined whether a distance between a frequency domain location of a sample in the sample group and a frequency domain location of a sample adjacent to the sample in frequency domain location is less than N frequency domain units according to the first sample parameters and the first threshold group, and the sample in the sample group which is less than N frequency domain units is included in the second data set.

For example, a first threshold group is acquired, it is determined whether there are at least K2 valid samples in a first preset frequency domain segment before a sample in the sample group according to the first sample parameters and the first threshold group, and if there are K2 valid samples, all samples in the sample group are included in the second data set.

For example, a first threshold group is acquired, it is determined whether there are at least K3 valid samples in a second preset frequency domain segment after a sample of the sample group according to the first sample parameters and the first threshold group, and if there are K3 valid samples, all samples in the sample group are included in the second data set.

In an embodiment, in the case where the sample includes a first parameter subset and/or a second parameter subset, the first parameter subset corresponding to at least one sample in the sample group meets a frequency domain constraint relationship; alternatively, the second parameter subset corresponding to at least one sample in the sample group meets the frequency domain constraint relationship; alternatively, the first parameter subset and the second parameter subset corresponding to at least one sample in the sample group meet the frequency domain constraint relationship.

It could be understood that: that the first parameter subset corresponding to at least one sample in the sample group meets the frequency domain constraint relationship is equivalent to that a feature of at least one sample in the sample group meets the frequency domain constraint relationship; similarly, that the second parameter subset corresponding to at least one sample in the sample group meets the frequency domain constraint relationship is equivalent to that a label of at least one sample in the sample group meets the frequency domain constraint relationship.

It is also worth noting that for the training and fine-tuning of an artificial intelligence model, the second communication device (such as the base station) can configure two interrelated reference signal resource sets to collect model input data and model label data respectively, and the model input data and the model label data are in a paired relationship. Since the first communication device (such as the terminal) can simultaneously feed back the frequency domain parameter sets obtained based on a plurality of frequency domain measurements (i.e., measurement results, that is, sets of a plurality of samples, or some parameters of the plurality of samples, such as sample characteristics) in one report, it is necessary to carry frequency domain information (such as sub-band, PRB group, subcarrier) corresponding to all frequency domain parameter sets in the report. Meanwhile, since the model input data and the model label data are in a paired relationship, when the model input data in a certain frequency domain is discarded due to poor quality, the model label data in a corresponding frequency domain should also be discarded at the same time.

It could be understood that an associated reference signal resource set is a frequency associated reference signal resource set. An associated frequency can be set according to actual conditions, which will not be specifically limited here. The frequency domain information is used to determine model input data and/or model label data at specific frequencies.

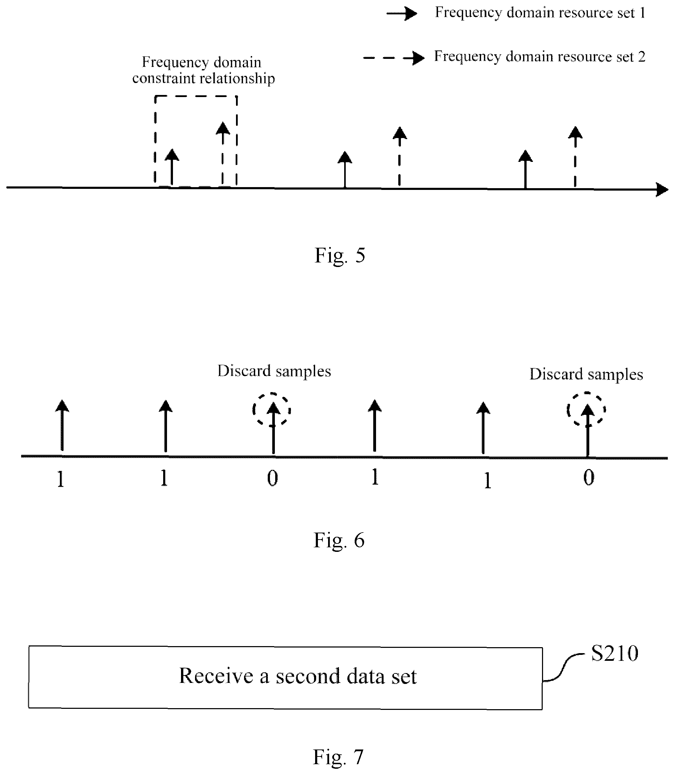

Based on this, a frequency domain constraint relationship can be set. When the first parameter subset and/or the second parameter subset corresponding to at least one sample in the sample group meets the frequency domain constraint relationship, the measurement results (i.e., samples) of two or more interrelated reference signal resource sets can be reported together, or can be discarded and not reported. For example, referring to Fig. 5, assuming that a reference signal resource set corresponding to the first parameter subset corresponding to at least one sample in the sample group is on a frequency domain resource set 1, and a reference signal resource set corresponding to the second parameter subset corresponding to at least one sample in the sample group is on a frequency domain resource set 2, if the first parameter subset and the second parameter subset corresponding to a certain sample in the sample group meet the frequency domain constraint relationship, the frequency domain resource set 1 corresponding to the first parameter subset is associated with the frequency domain resource set 2 corresponding to the second parameter subset. In this case, the samples corresponding to the first parameter subset and the second parameter subset which meet the frequency domain constraint relationship are reported together, or are discarded and not reported.

In an embodiment, the frequency domain constraint relationship includes at least one of the following:
in the sample group, a frequency domain location corresponding to a first parameter subset of a sample and a frequency domain location corresponding to a first parameter subset of a sample adjacent to the sample in frequency domain location are at adjacent frequency domain locations;
alternatively, in the sample group, a frequency domain location corresponding to a second parameter subset of a sample and a frequency domain location corresponding to a second parameter subset of a sample adjacent to the sample in frequency domain location are at adjacent frequency domain locations;
alternatively, in the sample group, a distance between a frequency domain location of a first parameter subset of a sample and a frequency domain location of a first parameter subset of a sample adjacent to the sample in frequency domain location is less than N frequency domain units;
alternatively, in the sample group, a distance between a frequency domain location of a second parameter subset of a sample and a frequency domain location of a second parameter subset of a sample adjacent to the sample in frequency domain location is less than N frequency domain units;
alternatively, in the sample group, a frequency domain location of a reference signal corresponding to a sample and a frequency domain location of a reference signal corresponding to a sample adjacent to the sample in frequency domain location differ by less than N frequency domain units;
alternatively, in the sample group, a frequency domain location of a reference signal corresponding to a sample and a frequency domain location of a reference signal corresponding to a sample adjacent to the sample in frequency domain location differ by less than N frequency domain units;
alternatively, in the sample group, a frequency domain location corresponding to a sample and a frequency domain location corresponding to a sample adjacent to the sample in frequency domain location are at adjacent frequency domain locations;
alternatively, in the sample group, a frequency domain location corresponding to a sample and a frequency domain location corresponding to a sample adjacent to the sample in frequency domain location differ by less than N frequency domain units.

In this embodiment, the frequency domain unit may be a subcarrier distance, a PRB, a sub-band, a PRB group, or the like, where the PRB refers to a physical resource block in a Bandwidth Part (BWP), and the PRB group is a set composed of a plurality of PRB in NR. The values of a threshold and a preset threshold can be determined according to actual conditions, which will not be specifically limited here.

In an embodiment, in a case where the first data set includes at least one first sample group and at least one second sample group associated with the first sample group, acquiring the second data set from the first data set according to the first sample parameters may include: acquiring a first threshold group, determining whether a first sample group meets a preset condition according to the first sample parameters and the first threshold group, and constructing the second data set with samples in the first sample group which meet the preset condition and a second sample group corresponding to the first sample group.

It could be understood that when the first sample groups do not meet the preset condition, all second sample groups associated with the first sample groups will be discarded. The first sample groups may be observation windows or prediction windows, which will not be specifically limited here.

For example, assuming that a first sample group corresponds to an observation window, when the first sample group does not meet the preset condition, all samples in the first sample group and the second sample group corresponding to the first sample group will be discarded, alternatively, when the first sample group meets the preset condition, all samples in the first sample group and the second sample group corresponding to the first sample group are included in the second data set.

Similarly, assuming that a first sample group corresponds to a prediction window, when the first sample group does not meet the preset condition, all samples in the first sample group and the second sample group corresponding to the first sample group will be discarded, alternatively, when the first sample group meets the preset condition, all samples in the first sample group and the second sample group corresponding to the first sample group are included in the second data set.

For example, assuming that a first sample group corresponds to an observation window and a second sample group corresponds to a prediction window, when the first sample group does not meet the preset condition or the second sample group does not meet the preset condition, all samples in the first sample group and the second sample group corresponding to the first sample group will be discarded, alternatively, when the first sample group meets the preset condition and the second sample group meets the preset condition, all samples in the first sample group and the second sample group corresponding to the first sample group are included in the second data set.

In an embodiment, in a case where the first sample group includes K samples, determining whether the first sample group meets the preset condition according to the first sample parameters and the first threshold group includes determining whether a sample group meets a preset condition according to the first sample parameters corresponding to at least one sample in the sample group and the first threshold group, including at least one of the following preset conditions: a number of valid samples in the sample group is greater than or equal to K1; alternatively, a ratio of the number of the valid samples in the sample group to the total number K of samples in the sample group is greater than or equal to a first preset ratio value; alternatively, a distance between a frequency domain location of a sample in the sample group and a frequency domain location of a sample adjacent to the sample in frequency domain location is less than N frequency domain units; alternatively, there are at least K2 valid samples in a first preset frequency domain segment before a sample in the sample group; alternatively, there are at least K3 valid samples in a second preset frequency domain segment after a sample in the sample group.

Similarly, the relevant explanation of each condition in the embodiment of the present disclosure may refer to the relevant content in the above embodiment of determining whether a sample group meets a preset condition, which will not be repeated here.

In an embodiment, acquiring the second data set from the first data set according to the second sample parameters may include: ranking the samples according to at least one parameter of the second sample parameters, and acquiring the second data set from the ranked samples, where the second sample parameters include at least one of the following parameters: a signal-to-interference noise ratio, a reference signal received power, a channel rank, a modulation and coding scheme, a channel quality indicator, a bit error rate, a block error rate or a movement velocity.

It could be understood that after ranking, the samples with higher rankings have higher quality. In addition, when the second sample parameters include a plurality of parameters, the samples can be ranked according to different parameters and priorities of the different parameters. The priorities of the signal-to-interference noise ratio, the reference signal received power, the channel rank, the modulation and coding scheme, the channel quality indicator, the bit error rate, the block error rate and the movement velocity of the second sample parameters can be set according to actual conditions, which will not be specifically limited here.

In an embodiment, ranking the samples according to at least one parameter of the second sample parameters, and acquiring the second data set from the ranked samples may include: ranking the samples in the first data set according to a first parameter of the second sample parameters, and acquiring the second data set from the ranked samples.

For example, assuming that the first parameter is the signal-to-interference noise ratio, the samples in the first data set can be ranked according to signal-to-interference noise ratios corresponding to the samples. The samples with higher signal-to-interference noise ratios are ranked at the top. **In** this case, **L1** samples ranked at the top can be acquired from the ranked samples, and the L1 samples are taken as the second data set.

It could be understood that the first parameter may also be the reference signal received power, the channel rank, the modulation and coding scheme, the channel quality indicator, the movement velocity, or the like, which will not be specifically limited here.

In an embodiment, ranking the samples according to at least one parameter of the second sample parameters, and acquiring the second data set from the ranked samples may include: after ranking the samples in the first data set according to the first parameter of the second sample parameters, ranking the samples with the same first parameter according to a second parameter of the second sample parameters, and acquiring the second data set from the ranked samples.

It could be understood that the priority of the first parameter is higher than that of the second parameter.

For example, assuming that the first parameter is the signal-to-interference noise ratio and the second parameter is the reference signal received power, in this case, the samples in the first data set are ranked according to the signal-to-interference noise ratio of the second sample parameters, then, the samples with the same signal-to-interference noise ratio are ranked according to the reference signal received power of the second sample parameters, finally, L1 samples ranked at the top are acquired from the ranked samples, and the L1 samples are taken as the second data set.

In an embodiment, ranking the samples according to at least one parameter of the second sample parameters, and acquiring the second data from the ranked samples may further include: after ranking the samples in the first data set according to the first parameter of the second sample parameters, and ranking the samples with the same first parameter according to the second parameter of the second sample parameters, ranking the samples with the same second parameter according to a third parameter of the second sample parameters, and acquiring the second data set from the ranked samples.

It could be understood that the priorities of the first parameter, the second parameter and the third parameter decrease in sequence.

For example, assuming that the first parameter is the reference signal received power, the second parameter is the channel rank, and the third parameter is the modulation and coding scheme, in this case, the samples in the first data set are ranked according to the reference signal received power of the second sample parameters; then, the samples with the same reference signal received power are ranked according to the channel rank of the second sample parameters; and finally, the samples with the same channel rank are ranked according to the modulation and coding scheme of the second sample parameters, and the second data set is acquired from the ranked samples.

In an embodiment, ranking the samples according to at least one parameter of the second sample parameters, and acquiring the second data set from the ranked samples may specifically further include: after ranking the samples in the first data set according to the first parameter of the second sample parameters, ranking the samples with the same ranking in sequence according to at least one second parameter of the second sample parameters which is different from the first parameter, ranking the samples with the same ranking in sequence according to at least one third parameter of the second sample parameters which is different from the first parameter and the second parameter, and so on, until L1 samples ranked at the top are determined, and acquiring the second data set from the ranked samples.

In an embodiment, acquiring the second data set from the first data set according to the first sample parameters and the second sample parameters may include: acquiring a first threshold group; then, acquiring a target data set from the first data set according to the first sample parameters corresponding to the at least one sample and the first threshold group; and finally, ranking the samples in the target data set according to at least one parameter of the second sample parameters, and acquiring the second data set from the ranked samples.

For example, assuming that the first data set includes L0 samples, first, a first threshold group is acquired; then, L3 target data sets are acquired from the first data set according to the first sample parameters and the first threshold group; and then, the samples in the L3 target data sets are ranked according to at least one parameter of the second sample parameters; and finally, L1 samples ranked at the top are acquired from the ranked samples, and the second data set is constructed with the L1 samples, where L0>=L3, and L3>=L1.

In an embodiment, the first sample parameters may include at least one of the following: a movement velocity, a reference signal received power (RSRP), a Signal-to-Interference Noise Ratio (SINR), a Modulation and Coding Scheme (MCS), a Channel Quality Indicator (CQI), a confidence, a prediction probability, a cosine similarity, a measurement time, an inference time, location parameter information, beam parameter information, a throughput, a bit error rate or a block error rate.

Further, it is also worth noting that, during the data collection phase, in order to collect a large number of samples simultaneously, the second communication device (such as the base station) can configure periodically sent reference signal resource sets and send the same reference signal resource sets separately in different frequency domains, and the first communication device (such as the terminal) can acquire a plurality of frequency domain parameter sets after measuring the reference signal resource sets separately. Since the first communication device (such as the terminal) can simultaneously feed back the frequency domain parameter sets obtained based on a plurality of frequency domain measurements (i.e., measurement results of the reference signal resource sets, that is, sets of samples) in one report, it is necessary to implicitly or explicitly report frequency domain information of each sample.

Based on this, in an embodiment, when the second data set is sent, frequency domain information corresponding to at least one sample in the second data set can also be sent, that is, the second data set and the frequency domain information of at least one sample in the second data set are sent simultaneously, where the frequency domain information includes a frequency domain location and/or bitmap of a transmitted reference signal resource corresponding to at least one sample, where the bitmap is configured to indicate whether the sample at the frequency domain location is valid or sent.

For example, referring to Fig. 6, when a certain sample is discarded due to poor quality (that is, the sample is invalid), frequency domain information of the sample is fed back as 0; and when a certain sample is reported (that is, the sample is sent), frequency domain information of the sample is fed back as 1.

Referring to Fig. 7, which is a flowchart of a data set receiving method provided by an embodiment of the present disclosure. The data set receiving method can be applied to a second communication device, such as the network side device shown in Fig. 1. The data set receiving method includes but is not limited to step S210.

At S210, a second data set is received.

The second data set includes L1 samples, the second data set is acquired by a first communication device from a first data set according to first sample parameters and/or second sample parameters, and the first data set includes L0 samples.

In this embodiment, by adopting the data set sending method including the above-mentioned step S210, a second data set can be received, where the second data set includes L1 samples, the second data set is acquired by a first communication device from a first data set according to first sample parameters and/or second sample parameters, and the first data set includes L0 samples, that is to say, the second communication device can receive a high-quality or qualified second data set from the first communication device which is screened out from the first data set through the first sample parameters and/or the second sample parameters, thereby improving the training effect of a model and then improving the performance of the model.

In an embodiment, the second communication device can send a first threshold group to the first communication device, which enables the first communication device to acquire the second data set from the first data set according to the first sample parameters corresponding to the at least one sample and the first threshold group; alternatively, the first communication device acquires a target data set from the first data set according to the first sample parameters corresponding to the at least one sample and the first threshold group, ranks the samples in the target data set according to at least one parameter of the second sample parameters, and acquires the second data set from the ranked samples.

In an embodiment, the second communication device can send a target feedback sample number L1 to the first communication device, so that the first communication device ranks the samples according to at least one parameter of the second sample parameters, and acquires the second data set from the ranked samples.

In an embodiment, ranking the samples according to at least one parameter of the second sample parameters, and acquiring the second data set from the ranked samples includes at least one of the following:
ranking the samples in the first data set according to a first parameter of the second sample parameters, and acquiring the second data set from the ranked samples;
alternatively, after ranking the samples in the first data set according to the first parameter of the second sample parameters, ranking the samples with the same first parameter according to a second parameter of the second sample parameters, and acquiring the second data set from the ranked samples;
alternatively, after ranking the samples in the first data set according to the first parameter of the second sample parameters, and ranking the samples with the same first parameter according to the second parameter of the second sample parameters, ranking the samples with the same second parameter according to a third parameter of the second sample parameters, and acquiring the second data set from the ranked samples;
alternatively, after ranking the samples in the first data set according to the first parameter of the second sample parameters, ranking the samples with the same ranking in sequence according to at least one target parameter of the second sample parameters which is different from the first parameter, until L1 samples ranked at the top are determined, and acquiring the second data set from the ranked samples.

In an embodiment, the first sample parameters may include at least one of the following: a movement velocity, a Reference Signal Received Power (RSRP), a Signal-to-Interference Noise Ratio (SINR), a Modulation and Coding Scheme (MCS), a Channel Quality Indicator (CQI), a confidence, a prediction probability, a cosine similarity, a measurement time, an inference time, location parameter information, beam parameter information, a throughput, a bit error rate or a block error rate.

In an embodiment, the second sample parameters include at least one of the following parameters: a signal-to-interference noise ratio, a reference signal received power, a channel rank, a modulation and coding scheme, a channel quality indicator, a movement velocity, a bit error rate or a block error rate.

In an embodiment, the second data set includes at least one sample group, where the sample group includes K frequency-domain associated samples. It could be understood that, since the first data set is screened in units of sample groups, the samples in the sample groups of the second data set are also frequency-related, which will not be repeated here.

In an embodiment, when the second data set is received, frequency domain information corresponding to at least one sample in the second data set can also be received.

In an embodiment, the frequency domain information includes a frequency domain location and/or bitmap of a transmitted reference signal resource corresponding to at least one sample, where the bitmap is configured to indicate whether the sample at the frequency domain location is valid or sent.

The method for receiving a data set at the second communication device side is similar to the method for sending a data set at the first communication device side, which will not be repeated here.

The base station can combine the second data sets collected once or more times into a large data set and save the data set locally for the base station to utilize for training, fine-tuning or testing, and can also send the collected data sets to other third-party servers, base stations or terminals for training or fine-tuning models.

In an embodiment, one communication node (i.e., a communication device) sends a functionality or function index to another communication node. For example, the base station (i.e., the second communication device) sends a functionality or function index to the terminal (i.e., the first communication device) to inform the terminal that the information can be processed utilizing the functionality, where the functionality may also be called a functional module, a functional function, a functional map, etc., and the functionality is configured to describe the characteristics or types of information processing modes. There are many types of information processing modes, such as positioning, beam management, CSI prediction, beam prediction, channel estimation, etc. The characteristics of the information processing modes include, but are not limited to, description of a scenario to which the functionality is adapted, description of input parameters, description of output parameters, and what type of measurement parameter the output result is. When one functionality corresponds to one or more information processing modes, each information processing mode can be implemented by one or more models, or one functionality can be implemented by one or more models.

In an embodiment, the base station (i.e., the second communication device) can process the information utilizing the functionality. The base station sends a reference signal to the terminal (i.e., the first communication device). After receiving the reference signal, the terminal can obtain channel matrix information H of a plurality of physical resource blocks according to the received reference signal. In an example, the terminal can obtain an eigenvector V or a quantized value of the eigenvector V of each sub-band according to the channel matrix information, where V is a complex matrix of Nt*Ns, and Nt and Ns represent the number of transmitting antennas and the rank of the channel matrix respectively. In order to efficiently feed back V or H of a plurality of sub-bands, it is necessary to compress V or H by an encoder, feed back the channel state information compressed by the encoder, receive the channel state information by the base station, and decompress the channel state information by a decoder at the base station side, so that V or H can be restored to a certain extent. In order to achieve good performance, the encoder and the decoder need samples for training or fine-tuning. In this process, a higher quality of a sample label or its similarity with the ideal V or H is expected. For high-precision or high-quality or qualified labels, the number of quantized bits is relatively large, which requires a large feedback overhead. Different users have different channel qualities (such as SINR, CQI, RSRP, etc.) due to their location. For example, some users in the center of the cell have higher channel quality, while some users at the edge of the cell have poor channel quality due to greater interference, resulting in poor label quality.

In an embodiment, a label may be a location coordinate or other location parameter information in positioning, such as at least one of TOA, RSTD, LoS/NLoS indicator, or angle information, etc.

In an embodiment, a label may be a beam metric parameter in beam management, such as one of L1-SINR, L1-RSRP, CRI, or SSBRI, etc.

In an embodiment, the high quality or qualification of the features corresponding to the samples is also very important. If some features are affected by interference or noise, or affected by the quantization accuracy of a device that collects the features and the measurement accuracy of the device, etc., the training accuracy of the model may also be affected.

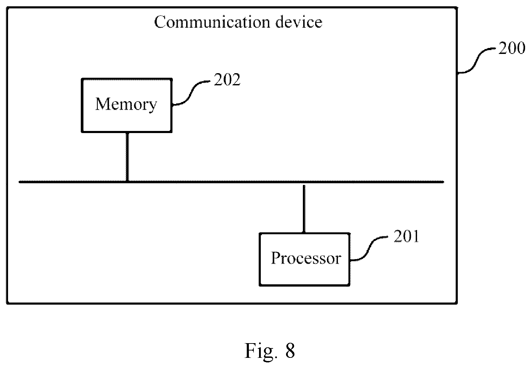

In addition, referring to Fig. 8, an embodiment of the present disclosure further provides a communication device 200. The communication device 200 includes at least one processor 201 and at least one memory 202, where the memory 202 is configured to store at least one program.

The processor 201 and the memory 202 can be connected via a bus or other means.

The memory 202, as a non-transitory computer-readable storage medium, can be used to store a non-transitory software program and a non-transitory computer-executable program. In addition, the memory 202 may include a high-speed random access memory, or may also include a non-volatile memory, such as at least one disk storage device, a flash memory device, or other non-volatile solid-state storage device. In some implementations, the memory 202 may optionally include memories remotely located relative to the processor 201. These remote memories can be connected to the processor 201 via a network. Examples of the above-mentioned network include, but are not limited to, the Internet, an intranet, a local area network, a mobile communication network and combinations thereof.

The non-transitory software program and instruction required to implement the data set sending method in the above embodiment are stored in the memory 202, when the non-transitory software program and instruction are executed by the processor 201, the data set sending method in the above embodiment is performed, for example, the method steps S110 to S130 in Fig. 2 described above are performed, or the data set receiving method in the above embodiment is performed, for example, the method step S210 in Fig. 7 described above is performed.

The device embodiments described above are merely illustrative, where the units described as separate components may or may not be physically separated, that is, may be located in one place, or may be distributed over a plurality of network units. Some or all of the modules can be selected according to actual needs to achieve the purpose of the scheme in this embodiment.

In addition, an embodiment of the present disclosure further provides a computer-readable storage medium storing a computer-executable instruction which, when executed by a processor or a controller, for example, by a processor in the above-mentioned device embodiment, cause the above-mentioned processor to perform the data set sending method in the above-mentioned embodiment, perform the method steps S110 to S130 in Fig. 2 described above, or perform the data set receiving method in the above-mentioned embodiment, for example, perform the method step S210 in Fig. 7 described above.

In addition, an embodiment of the present disclosure further provides a computer program product, including a computer program or a computer instruction, where the computer program or the computer instruction is stored in a computer-readable storage medium, a processor of a computer device reads the computer program or the computer instruction from the computer-readable storage medium, and the processor executes the computer program or the computer instruction, to cause the computer device to perform the data set sending method in the above embodiment, for example, perform the method steps S110 to S130 in Fig. 2 described above, or perform the data set receiving method in the above embodiment, for example, perform the method step S210 in Fig. 7 described above.

Those having ordinary skill in the art will appreciate that all or some of the steps and systems in the methods disclosed above can be implemented as software, firmware, hardware, or a suitable combination thereof. Some or all of the physical components can be implemented as software performed by a processor, such as a central processing unit, a digital signal processor or a microprocessor, or as hardware, or as an integrated circuit, such as an application specific integrated circuit. Such software can be distributed on computer-readable media, which may include computer storage media (or non-transitory media) and communication media (or transitory media). As is known to those having ordinary skills in the art, the term "computer storage media" includes volatile and nonvolatile, removable and non-removable media implemented in any method or technology for storage of information such as computer readable instructions, data structures, program modules or other data. The computer storage medium includes, but is not limited to, RAM, ROM, EEPROM, flash memory or other memory technology, CD-ROM, digital versatile disk (DVD) or other optical disk storage, magnetic cassette, magnetic tape, magnetic disk storage or other magnetic storage device, or any other medium that can be used to store the desired information and which can be accessed by a computer. Furthermore, it is well known to those having ordinary skills in the art that the communication medium typically includes computer readable instructions, data structures, program modules, or other data in a modulated data signal such as a carrier wave or other transport mechanism, and may include any information delivery media.

## Claims

1. A data set sending method, which is applied to a first communication device, the method comprising:
acquiring a first data set, the first data set comprising L0 samples;
acquiring a second data set from the first data set according to first sample parameters and/or second sample parameters, the second data set comprising L1 samples; and
sending the second data set,
wherein L0 and L1 are positive integers, and L1 is not greater than L0.

2. The method of claim 1, wherein acquiring the second data set from the first data set according to the first sample parameters comprises:
acquiring a first threshold group; and
acquiring the second data set from the first data set according to the first sample parameters corresponding to at least one sample and the first threshold group.

3. The method of claim 1, wherein acquiring the second data set from the first data set according to the second sample parameters comprises:
ranking the samples according to at least one parameter of the second sample parameters, and acquiring the second data set from the ranked samples.

4. The method of claim 3, wherein ranking the samples according to at least one parameter of the second sample parameters, and acquiring the second data set from the ranked samples comprises at least one of the following:
ranking the samples in the first data set according to a first parameter of the second sample parameters, and acquiring the second data set from the ranked samples;
alternatively, after ranking the samples in the first data set according to a first parameter of the second sample parameters, ranking the samples with the same first parameter according to a second parameter of the second sample parameters, and acquiring the second data set from the ranked samples;
alternatively, after ranking the samples in the first data set according to a first parameter of the second sample parameters, ranking the samples with the same first parameter according to a second parameter of the second sample parameters, ranking the samples with the same second parameter according to a third parameter of the second sample parameters, and acquiring the second data set from the ranked samples;
alternatively, after ranking the samples in the first data set according to a first parameter of the second sample parameters, ranking the samples with the same ranking in sequence according to at least one second parameter of the second sample parameters which is different from the first parameter, until L1 samples ranked at the top are determined, and acquiring the second data set from the ranked samples.

5. The method of claim 1, wherein acquiring the second data set from the first data set according to the first sample parameters and the second sample parameters comprises:
acquiring a first threshold group;
acquiring a target data set from the first data set according to the first sample parameters corresponding to the at least one sample and the first threshold group; and
ranking the samples in the target data set according to at least one parameter of the second sample parameters, and acquiring the second data set from the ranked samples.

6. The method of claim 1, wherein the first sample parameters comprise at least one of the following:
a movement velocity, a Reference Signal Received Power (RSRP), a Signal-to-Interference Noise Ratio (SINR), a Modulation and Coding Scheme (MCS), a Channel Quality Indicator (CQI), a confidence, a prediction probability, a cosine similarity, a measurement time, an inference time, location parameter information, beam parameter information, a throughput, a bit error rate or a block error rate.

7. The method of claim 1, wherein the second sample parameters comprise at least one of the following:
an SINR, an RSRP, a channel rank, an MCS, a CQI, a movement velocity, a bit error rate or a block error rate.

8. The method of claim 1, wherein the first data set comprises at least one sample group, wherein the sample group comprises K frequency-domain associated samples.

9. The method of claim 8, wherein acquiring the second data set from the first data set according to the first sample parameters comprises:
acquiring a first threshold group;
determining whether a sample group meets a preset condition according to the first sample parameters corresponding to at least one sample in the sample group and the first threshold group; and
including the sample in the sample group which meets the preset condition in the second data set.

10. The method of claim 9, wherein determining whether the sample group meets the preset condition according to the first sample parameters corresponding to at least one sample in the sample group and the first threshold group comprises at least one of the following preset conditions:
a number of valid samples in the sample group being greater than or equal to K1;
alternatively, a ratio of a number of valid samples in the sample group to the total number K of samples in the sample group being greater than or equal to a first preset ratio value;
alternatively, a distance between a frequency domain location corresponding to a sample in the sample group and a frequency domain location corresponding to a sample adjacent to the sample in frequency domain location being less than N frequency domain units;
alternatively, at least K2 valid samples existing in a first preset frequency domain segment before a sample in the sample group;
alternatively, at least K3 valid samples existing in a second preset frequency domain segment after a sample in the sample group,
wherein K, K1, K2, K3 are positive integers, and K1, K2 and K3 are not greater than K.

11. The method of any one of claims 8 to 10, wherein the sample comprises a first parameter subset and/or a second parameter subset, and wherein:
the first parameter subset corresponding to at least one sample in the sample group meets a frequency domain constraint relationship;
alternatively, the second parameter subset corresponding to at least one sample in the sample group meets a frequency domain constraint relationship;
alternatively, the first parameter subset and the second parameter subset corresponding to at least one sample in the sample group meet a frequency domain constraint relationship.

12. The method of claim 11, wherein the frequency domain constraint relationship comprises at least one of the following:
in the sample group, a frequency domain location corresponding to a first parameter subset of a sample and a frequency domain location corresponding to a first parameter subset of a sample adjacent to the sample in frequency domain location being at adjacent frequency domain locations;
alternatively, in the sample group, a frequency domain location corresponding to a second parameter subset of a sample and a frequency domain location corresponding to a second parameter subset of a sample adjacent to the sample in frequency domain location being at adjacent frequency domain locations;
alternatively, in the sample group, a distance between a frequency domain location of a first parameter subset of a sample and a frequency domain location of a first parameter subset of a sample adjacent to the sample in frequency domain location being less than N frequency domain units;
alternatively, in the sample group, a distance between a frequency domain location of a second parameter subset of a sample and a frequency domain location of a second parameter subset of a sample adjacent to the sample in frequency domain location being less than N frequency domain units;
alternatively, in the sample group, a frequency domain location of a reference signal corresponding to a sample and a frequency domain location of a reference signal corresponding to a sample adjacent to the sample in frequency domain location being at adjacent frequency domain locations;
alternatively, in the sample group, a frequency domain location of a reference signal corresponding to a sample and a frequency domain location of a reference signal corresponding to a sample adjacent to the sample in frequency domain location differ by less than N frequency domain units;
alternatively, in the sample group, a frequency domain location corresponding to a sample and a frequency domain location corresponding to a sample adjacent to the sample in frequency domain location being at adjacent frequency domain locations;
alternatively, in the sample group, a frequency domain location corresponding to a sample and a frequency domain location corresponding to a sample adjacent to the sample in frequency domain location differ by less than N frequency domain units.

13. The method of claim 1, wherein the first data set comprises at least one first sample group and at least one second sample group associated with the first sample group, acquiring the second data set from the first data set according to the first sample parameters comprises:
acquiring a first threshold group;
determining whether a first sample group meets a preset condition according to the first sample parameters and the first threshold group; and
constructing the second data set with samples in the first sample group which meet the preset condition and a second sample group corresponding to the first sample group.

14. The method of claim 13, wherein the first sample group comprises K samples, determining whether the first sample group meets the preset condition according to the first sample parameters and the first threshold group comprises one of the following:
a number of valid samples in the first sample group being greater than or equal to K1;
alternatively, a ratio of a number of valid samples in the first sample group to the total number K of samples in the first sample group being greater than or equal to a first preset ratio value;
alternatively, a distance between a frequency domain location of a sample in the first sample group and a frequency domain location of a sample adjacent to the sample in frequency domain location being less than N frequency domain units;
alternatively, at least K2 valid samples existing in a first preset frequency domain segment before a sample in the first sample group;
alternatively, at least K3 valid samples existing in a second preset frequency domain segment after a sample in the first sample group,
wherein K, K1, K2, K3 are positive integers, and K1, K2 and K3 are not greater than K.

15. The method of claim 10 or 14, wherein the frequency domain unit comprises at least one of the following:
a subcarrier distance, a number of resource blocks, a number of sub-bands, or a number of central frequency bands.

16. The method of claim 1, wherein sending the second data set comprises:
sending the second data set and/or frequency domain information corresponding to at least one sample in the second data set.

17. The method of claim 16, wherein the frequency domain information comprises at least one of the following:
a frequency domain location of a transmitted reference signal resource corresponding to the at least one sample; or
a bitmap configured to indicate whether the sample at the frequency domain location is valid or sent.

18. A data set receiving method, which is applied to a second communication device, the method comprising:
receiving a second data set, the second data set comprising L1 samples;
wherein the second data set is acquired by a first communication device from a first data set according to first sample parameters and/or second sample parameters, and the first data set comprises L0 samples; and
wherein L0 and L1 are positive integers, and L1 is not greater than L0.

19. The method of claim 18, further comprising:
sending a first threshold group.

20. The method of claim 18, wherein the second data set is acquired by the first communication device from the first data set according to the first sample parameters, comprising:
acquiring the second data set from the first data set according to the first sample parameters corresponding to at least one sample and the first threshold group;
alternatively, acquiring a target data set from the first data set according to the first sample parameters corresponding to the at least one sample and the first threshold group, ranking the samples in the target data set according to at least one parameter of the second sample parameters, and acquiring the second data set from the ranked samples.

21. The method of claim 20, wherein ranking the samples in the target data set according to at least one parameter of the second sample parameters, and acquiring the second data set from the ranked samples comprises at least one of the following:
ranking the samples in the first data set according to a first parameter of the second sample parameters, and acquiring the second data set from the ranked samples;
alternatively, after ranking the samples in the first data set according to a first parameter of the second sample parameters, ranking the samples with the same first parameter according to a second parameter of the second sample parameters, and acquiring the second data set from the ranked samples;
alternatively, after ranking the samples in the first data set according to a first parameter of the second sample parameters, ranking the samples with the same first parameter according to a second parameter of the second sample parameters, ranking the samples with the same second parameter according to a third parameter of the second sample parameters, and acquiring the second data set from the ranked samples;
alternatively, after ranking the samples in the first data set according to a first parameter of the second sample parameters, ranking the samples with the same ranking in sequence according to at least one target parameter of the second sample parameters which is different from the first parameter, until **L1** samples ranked at the top are determined, and acquiring the second data set from the ranked samples.

22. The method of claim 18, wherein the first sample parameters comprise at least one of the following:
a movement velocity, a Reference Signal Received Power (RSRP), a Signal-to-Interference Noise Ratio (SINR), a Modulation and Coding Scheme (MCS), a Channel Quality Indicator (CQI), a confidence, a prediction probability, a cosine similarity, a measurement time, an inference time, location parameter information, beam parameter information, a throughput, a bit error rate or a block error rate.

23. The method of claim 18, wherein the second sample parameters comprise at least one of the following:
an SINR, an RSRP, a channel rank, an MCS, a CQI, a movement velocity, a bit error rate or a block error rate.

24. The method of claim 18, wherein the second data set comprises at least one sample group, and the sample group comprises K frequency-domain associated samples.

25. The method of claim 18, wherein receiving the second data set comprises:
receiving the second data set and/or frequency domain information of at least one sample in the second data set.

26. The method of claim 25, wherein the frequency domain information comprises at least one of the following:
a frequency domain location of a transmitted reference signal resource corresponding to the sample; or
a bitmap configured to indicate whether the sample at the frequency domain location is valid or sent.

27. A communication device, comprising:
at least one processor; and
at least one memory configured to store at least one program,
wherein when the at least one program is executed by the at least one processor, the data set sending method of any one of claims 1 to 17 or the data set receiving method of any one of claims 18 to 26 is implemented.

28. A computer-readable storage medium, storing a processor-executable program, wherein the processor-executable program is configured to implement the data set sending method of any one of claims 1 to 17 or the data set receiving method of any one of claims 18 to 26 when executed by a processor.

29. A computer program product, comprising a computer program or a computer instruction, wherein the computer program or the computer instruction is stored in a computer-readable storage medium, a processor of a computer device reads the computer program or the computer instruction from the computer-readable storage medium, and the processor executes the computer program or the computer instruction, to cause the computer device to perform the data set sending method of any one of claims 1 to 20 or the data set receiving method of any one of claims 18 to 26.
